# EUROPÄISCHE PATENTSCHRIFT

(11) **EP 1 159 458 B1**
(45) Veröffentlichungstag und Bekanntmachung des Hinweises auf die Patenterteilung: **11.06.2003**
(21) Anmeldenummer: 00910545.3
(22) Anmeldetag: 22.02.2000
(51) Int. Cl.: C13D 1/00, A23L 3/3508, C12H 1/00

(54) **VERFAHREN ZUR BEKÄMPFUNG VON MIKROORGANISMEN IN EINEM ZUCKERHALTIGEN, WÄSSRIGEN PROZESSMEDIUM**
METHOD FOR CONTROLLING MICROORGANISMS IN A SUGAR-CONTAINING AQUEOUS PROCESS MEDIUM
PROCEDE DE LUTTE CONTRE DES MICRO-ORGANISMES DANS UN MILIEU DE PROCESSUS AQUEUX CONTENANT DU SUCRE

(30) Priorität: 05.03.1999 DE 19909827
(43) Veröffentlichungstag der Anmeldung: 05.12.2001
(73) Patentinhaber: Betatec Hopfenprodukte GmbH, 90482 Nürnberg (DE); ZUCKERFORSCHUNG TULLN GESELLSCHAFT M.B.H., A-3430 Tulln (AT)
(72) Erfinder: MAYE, John-Paul, Haas Hop Prod., Inc., Washington, DC 200 16-3341 (US); BEDDIE, David, Wigan Hop Prod., Ltd., Worcestershire WR15 8JJ (GB); POLLACH, Günter, 2301 Gross-Enzersdorf (AT)
(74) Vertreter: Stippl, Hubert, Dipl.-Ing.
(86) Internationale Anmeldenummer: DE0000485
(87) Internationale Veröffentlichungsnummer: WO00053814

(56) Entgegenhaltungen:
- EP-A- 0 339 147
- EP-A- 0 916 738
- WO-A-97/33971
- GB-A- 1 058 975
- US-A- 5 166 449

## Beschreibung

Die vorliegende Erfindung betrifft ein Verfahren zur kontrolle des Gehalts an Mikroorganismen in einem zuckerhaltigen, wässrigen Prozeßmedium von Extraktionsanlagen der Zuckerindustrie unter Einsatz von Hopfensäure als Wirksubstanz. Die Erfindung betrifft desweiteren die Verwendung von Hopfensäure zur Kontrolle des Gehalts an Mikroorganismen in einem zuckerhaltigen, wässrigen Prozeßmedium von Extraktionsanlagen der Zuckerindustrie.

Die bakteriostatische Wirkung von Hopfensäure ist bereits seit längerem bekannt. Hopfensäuren wurden zur Haltbarmachung von Bier seit vielen Jahren genutzt (WO 97/33971, EP 339 147, GB1058975.). Die Anwendung von Hopfensäure im Brauwesen ist allerdings immer mehr durch eine bakterienfreie Gärung sowie Abfüllung in den Hintergrund getreten.

Aus der EP 0 681 029 A2 ist ein Verfahren zur Hemmung thermophiler Mikroorganismen in Gegenwart zuckerhaltiger wäßriger Medien bekannt, bei dem ein Zusatzmittel auf Hopfenbasis, vorzugsweise Hopfenextrakt, in flüssiger oder emulgierter Form den zuckerhaltigen wäßrigen Medien der Zuckerindustrie (d.h. Extrakten von zuckerhaltigen Pflanzen) zugeführt wird und eine Einwirkung bei Temperaturen zwischen 50° C und 80° C erfolgt. Die Lösung des Hopfenextrakts erfolgt in Wasser aber auch unter Zusatz von Alkohol. Die Zuführung des gelösten oder emulgierten Hopfenprodukts kann kontinuierlich oder aber diskontinuierlich (Schockdosierung) erfolgen.

Aus US 5,286,506 ist es bereits bekannt, Hopfensäure zur Bekämpfung von Bakterien, insbesondere Listeria, in Nahrungsmittelfertigprodukten, anzuwenden. Die Anwendung erfolgt hierbei dadurch, daß feste Nahrungsmittelfertigprodukte in eine Lösung von β-Säure eingetaucht oder mit dieser Besprüht werden.

Aus Arch. Mikrobiol. 94 (1973), S. 159 - 171 ist bekannt, daß Hopfensäuren im Bereich einer minimalen Konzentration bakteriostatisch bei höheren Konzentrationen allerdings toxisch wirken. Beim Einsatz von sogenannten "β-Säuren" als eine besondere Art der Hopfensäuren, die nach der vorerwähnten Veröffentlichung im Vergleich zu α-Säuren sowie Iso-α-Säuren die höchste bakteriostatische Wirkung zeigen, können wegen der geringen Löslichkeit bestimmte Konzentrationen an β-Säure nicht überschritten werden.

Am ehesten wird noch bei der Bekämpfung thermophiler Mikroorganismen gemäß EP 0 681 029 A2 durch die dort vorherrschende höheren Temperaturen des Prozeßmediums eine hohe Löslichkeit von β-Säuren und damit eine bessere Wirksamkeit erreicht.

Die Aufgabe der vorliegenden Erfindung besteht darin, die Effizienz des gattungsgemäßen Verfahrens zu steigern.

Die Aufgabe wird erfindungsgemäß dadurch gelöst, daß Hopfensäure in einem wäßrigen alkalischen Medium in Lösung gebracht dem Prozeßmedium zugegeben wird, wobei der pH-Wert der dazugegebenen Lösung höher ist als der pH-Wert des Prozeßmediums und die Hopfensäure im Prozeßmedium von der dissoziierten Form in die undissoziierte Form übergeht. Aufgrund der geringen Dosiermenge an zugegebener Lösung im Vergleich zum Prozeßmedium nimmt die Lösung nach Zugabe in das Prozeßmedium vollständig den pH-Wert des Prozeßmediums an, wodurch die Hopfensäure von der dissoziierten Form in die undissoziierte, antibakteriell wirksame Form übergeht. Überraschenderweise hat sich gezeigt, daß die Wirkung von Hopfensäure, wenn sie im Prozeßmedium aus dem dissoziierten Zustand in die undissoziierte Form übergeht, besonders gut ist. Dies hat zur Folge, daß zur Erzielung der gewünschten Wirkung der Gesamteinsatz an Hopfensäure im Vergleich zu bisher erheblich reduziert werden kann. Demgegenüber ist auch eine gesteigerte Wirkung bei gleicher Dosierung wie bisher erzielbar. Das erfindungsgemäße Verfahren wird bei Prozeßmedien in Form von zuckerhaltigen Pflanzenextraktionslösungen des Zuckerherstellungsprozesses angewandt.

Zweckmäßigerweise wird die Lösung dem Prozeßmedium periodisch zugegeben, d.h. es erfolgt zu bestimmten Zeitpunkten eine Zugabe innerhalb sehr kurzer Zeit, bei der lokal und kurzfristig hohe Konzentrationen eingestellt werden (Schockdosierung). Eine derartige Dosierung wirkt durch die hohen lokalen Konzentrationen einer Adaptierung von Mikroorganismen entgegen.

Zweckmäßigerweise weist die dem Prozeßmedium zuzuführende Lösung Hopfensäure in einer Konzentration von 2 - 40 %, vorzugsweise 5 - 20 %, besonders vorzugsweise 10 - 15 %, auf. Hohe Konzentrationen sind aus der Sicht einer Zwischenlagerung sowie im Hinblick auf einen Transport besonders günstig.

Der pH-Wert der dem Prozeßmedium zugegebenen Lösung liegt in einem Bereich von 7,0 - 13,0 vorzugsweise 7,5 - 11,5 vorzugsweise 9,5 - 10,5. In diesem Bereich wird bei Anwendung der Lösung eine besonders hohe Effizienz erreicht. Die Lösung kann ohne der Gefahr von Verätzungen der menschlichen Haut zugegeben werden. Die Lösung entwickelt darüber hinaus im Gegensatz zu anderen chemischen Mitteln keinen unangenehmen oder die Gesundheit gefährdenden Dampfdruck.

Eine besonders hohe Effizienz ergibt sich bei der Anwendung von β-Säuren als Hopfensäure. Es können allerdings auch α-Säuren oder ein Gemisch von α- und β-Säuren Anwendung finden. α-Säuren werden bei der Herstellung der Lösung in Iso-α-Säuren umgewandelt und behalten als solche ihre bakteriostatische Wirkung.

Erfindungsgemäß kann es sich bei der Hopfensäure - zumindest vorwiegend - um isomerierte Hopfensäure und/oder um deren Derivate oder ein Gemisch davon handeln. Hierbei handelt es sich zweckmäßigerweise um Tetrahydro-α-Säure (THAA) oder um Hexadydro-β-Säure (HHBA) und bei den isomerierten Hopfensäure-Derivaten um Iso-α-Säure (IAA), Rho-Iso-α-Säure (RIAA), Tetrahydro-iso-α-Säure (THIAA) und/oder Hexahydroxid-Iso-α-Säure oder ein Gemisch aus vorstehenden Verbindungen.

Als alkalisches Medium ist zweckmäßigerweise ein Alkalihydroxid, insbesondere Kaliumhydroxid oder Natriumhydroxid oder ein Gemisch davon vorgesehen. Die Konzentration des alkalischen Mediums beträgt zweckmäßigerweise 0,1 - 5,0, vorzugsweise 1 - 4 %, vorzugsweise 2 - 3 %.

Eine besondere Variante des erfindungsgemäßen Verfahrens ist dadurch gekennzeichnet, daß neben der Zugabe der in Lösung gebrachten Hopfensäure zusätzlich Alkalilauge, vorzugsweise in Konzentrationen von 5 - 25 %, dem Prozeßmedium zugeführt und dadurch eine Behandlung unter verstärkt alkalischen Bedingungen vorgenommen wird. Die verstärkt alkalischen Bedingungen im Prozeßmedium sorgen für eine verzögerte Ausfällung der β-Säuren und damit für eine zusätzlich Effizienzsteigerung. Diese Effizenzsteigerung wirkt sich besonders vorteilhaft bei diskontinuierlicher Zugabe der Lösung aus.

Die Lösung kann insbesondere beim vorgenannten Anwendungsbereich z.B. bei Verwendung von Trog-Extrationsanlagen durch manuelles Eingießen zugeführt werden.

Alternativ hierzu läßt sich bei geschlossenen Dosiersystemen, welche zur emissionsfreien Dosierung von Formalin in vielen Zuckerfabriken vorhanden sind, die Lösung über diese Dosiersysteme zuführen, d.h. die Bekämpfung von Mikroorganismen kann unter Beibehaltung der bereits bestehenden Verfahrenstechnik (geschlossene Dosiersysteme) vorgenommen werden.
Die Herstellung einer Lösung von Hopfensäure zur Anwendung in dem Verfahren gemäß den Patentansprüchen 1 - 14 erfolgt durch folgende Verfahrensschritte :
a) Bereitstellen eines wäßrigen Mediums;
b) Erhitzen;
c) Zugabe von Hopfensäure, insbesondere aufgeschmolzener Hopfensäure, bei Bemessung der Menge von Hopfensäure derart, daß die Endkonzentration in einem vorgegebenen Konzentrationsbereich liegt;
d) Zugabe des alkalischen Mediums zur Erreichung eines vorbestimmten pH-Werts;
e) Mischen des alkalischen Mediums mit der zugegebenen Hopfensäure;
f) Halten der Mischung in einem erhöhten Temperaturbereich über einen vorgegebenen Zeitraum;
g) Abtrennen der Hopfensäurelösung aus der Mischung oder umgekehrt sowie
h) Abkühlen der Hopfensäurelösung.

Durch das obige Verfahren läßt sich eine Lösung bereitstellen, die über längere Zeit bei hohen Konzentrationen an Hopfensäure zwischengelagert bzw. transportiert werden kann. Gleichzeitig gewährleistet die Lösung eine Reduzierung der Gesamteinsatzmenge an Hopfensäure im Vergleich zu bisherigen Verfahren. Die Verfahrensschritte können in ihrer zeitlichen Reihenfolge geändert werden. Die vorerwähnte Abfolge gewährt eine sehr genaue Einstellung des pH-Werts der Lösung.

Die Erfindung betrifft desweiteren die Verwendung von Hopfensäure zur kontrolle des Gehalts an Mikroorganismen in einem zuckerhaltigen, wässrigen Prozeßmedium von Extraktionsanlagen der Zuckerindustrie welche derartig gekennzeichnet ist, daß Hopfensäure in einem alkalischen Medium in Lösung gebracht dem Prozeßmedium zugegeben wird, wobei der pH-Wert der Lösung höher ist als der pH-Wert des Prozeßmediums und die Hopfensäure im Prozeßmedium von der dissoziierten in die undissoziierte Form übergeht nach einem der Verfahrensansprüche 1 - 14.

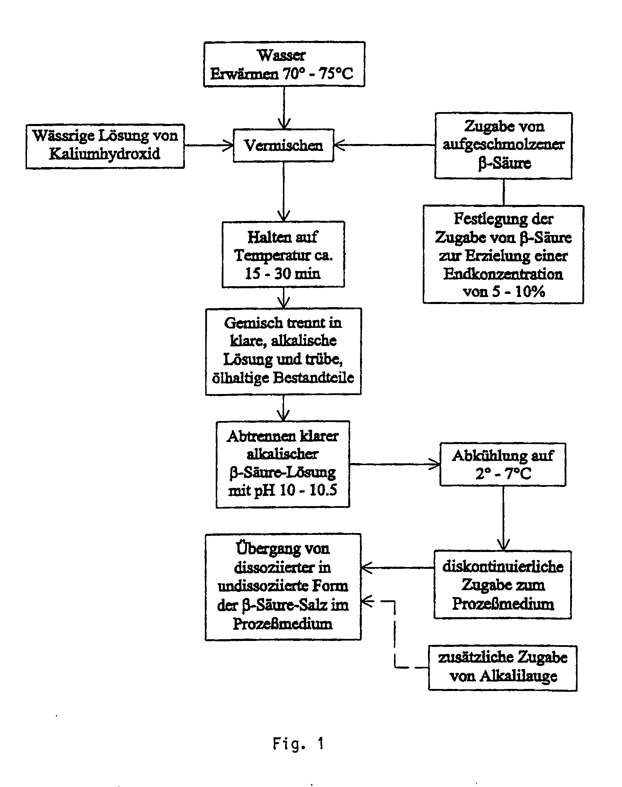

Die einzige Zeichnungsfigur zeigt in stark vereinfachter schematischer Prozeßablauffolge die einzelnen Schritte zur Durchführung des erfindungsgemäßen Verfahrens.

Man erwärmt hierzu eine wäßrige Lösung auf 70 - 75° C und trägt in diese Lösung aufgeschmolzenes β-säurenhaltiges Hopfenextrakt ein. Die Menge an Hopfenextrakt wird so bemessen, daß die Endkonzentration der Säure in Lösung bei etwa 10 - 15 % liegen soll, wobei höhere Konzentrationen an β-Säuren aus der Sicht einer Zwischenlagerung oder eines längeren Transports besonders günstig sind. Kaliumhydroxid wird zugegeben bis der vorbestimmte pH-Wert erreicht ist.

Die Mischung wird anschließend etwa 15 - 30 min lang auf Temperatur gehalten.

Das Gemisch trennt in die klare, alkalische β-Säurelösung sowie trübe ölhaltige Bestandteile. Die klare, alkalische β-Säurelösung mit einem pH-Wert von vorzugsweise etwa 10 - 10,5 wird aus dem Gemisch abgezogen und auf eine Temperatur unter Raumtemperatur, vorzugsweise 2 - 7°C abgekühlt. Anschließend wird sie dem Prozeßmedium diskontinuierlich, d.h. in Schockdosierung zugeführt.

Dort vermischt sich die Lösung mit dem leicht sauer oder zumindest weniger alkalisch reagierenden Prozeßmedium, wobei infolge der geringen Dosiermengen der hochkonzentrierten β-Säurelösung diese nahezu vollständig den pH-Wert des Prozeßstroms annimmt, worauf die β-Säure aus ihrer dissoziierten Salzform in die undissoziierte, antibakterielle wirksame Form übergeht.

Im Hopfenextrakt enthaltene α-Säuren werden bei der Herstellung der Lösung in Iso-α-Säuren umgewandelt und behalten als solche eine bakteriostatische Wirkung.

Eine solche Lösung weist aufgrund einer gemäßigten Alkalität in bezug auf Transport, Manipulation und Zwischenlagerung günstige Eigenschaften auf und ist mehrere Monate haltbar. Aufgrund ihrer Zusammensetzung kann die Lösung beispielsweise an Trog-Extraktionsanlagen der Zuckerindustrie durch manuelles Eingießen in Luken dosiert werden. Es ist weder eine Verätzung der menschlichen Haut zu befürchten, noch entwickelt die alkalische Lösung, im Gegensatz zu anderen chemischen Mitteln, einen unangenehmen oder die Gesundheit gefährdenden Dampfdruck (wie dies bei Formalin gegeben ist). Ebenso ist aufgrund des gewählten pH-Wertes der Lösung eine hohe Effizienzsteigerung bei direkter Anwendung der Lösung erreichbar.

Man kann die Lösung auch über geschlossene Dosiersysteme, welche zur emissionsfreien Dosierung von Formalin in vielen Zuckerfabriken vorhanden sind, zuführen, wenn die Formalinpumpe anstelle von Formalin mit Weichwasser betrieben und die alkalische Hopfensäurelösung in die Saugleitung der laufenden Pumpe dosiert wird. Die alkalische Lösung kann dabei eingesaugt, durch statische Höhe eingedrückt oder mittels zweiter Pumpe dosiert werden, wobei durch ein kurzes Nachlaufen der Wasserpumpe ein Ausspülen der Leitung erreicht wird.

Die Lösung kann bei Verwendung der geschlossenen Dosiersysteme durch zusätzliche Verwendung von Alkalilauge auch unter verstärkt alkalischen Bedingungen dosiert werden. Dabei wird parallel zur Hopfensäurelösung Alkalilauge in Konzentrationen von 5 - 25 % in das Prozeßmedium dosiert. Dabei können für kurze Zeit auch stärker alkalische Bedingungen, die bei einer Zwischenlagerung zu Verlusten an β-Säuren führen würden gewählt werden. Durch zusätzliche Verwendung von Alkalilauge und Ausbildung alkalischer Schlieren im Prozeßmedium wird eine zumindest geringfügig verzögerte Ausfällung bzw. Bildung der undissoziierten Form der β-Säuren und ein zusätzlicher Verbesserungseffekt erreicht.

Schließlich ist es möglich, direkt am Prozeßmedium, d.h. in der Fabrik von aufgeschmolzenem, handelsüblichem Hopfenextrakt auszugehen und diesen kurz vor einer Schockdosierung bei erhöhter Temperatur mit Alkalilauge zu vermischen. Nach einer kurzen Lösungszeit wird die gesamte Mischung als Einzelschock dosiert. Auch dabei können kurze Zeit stärker alkalische Bedingungen, die bei einer Zwischenlagerung zu Verlusten an Hopfensäure führen würden, gewählt werden.

Durch Zeitsteuerung für Dosierpumpen und Ventile kann der Vorgang automatisiert werden. Auch in diesem Fall tritt die der vorliegenden Erfindung zugrundeliegende Effizienzsteigerung ein.

Durch die verbesserte Wirkung wird der Gesamteinsatz an Wirkstoffen reduziert, was mit verschiedenen Vorteilen verbunden ist. Entweder ergeben sich verminderte Kosten durch reduzierte Dosierung oder eine gesteigerte Wirkung bei gleicher Dosierung.

Für Hopfenprodukte mit gleicher Konzentration reduziert sich durch die Effizienzsteigerung das Transportvolumen. Weiter ist von Bedeutung, daß die festen Rückstände einer Zuckerrübenextraktion verfüttert werden und bei übermäßiger Steigerung der Dosis zur Bekämpfung teilweise adaptierter Mikroorganismen Oxydationsprodukte von β-Säuren zu einem bitteren Geschmack der Futtermittel führen könnten. Bei einer Steigerung der Effizienz wird dieser Nachteil vermindert.

Zuckerfabriken haben je nach Umfeld und Gesetzeslage unterschiedliche Optimalbedingungen für den Betrieb der Extraktion. In manchen Fällen werden Mikroorganismen im niedrigen Konzentrationsbereich bewußt zugelassen, um die Abpreßbarkeit der extrahierten Schnitzel zu verbessern. In solchen Fabriken kann Mikroorganismenwachstum durch alkalische Hopfenlösungen besser limitiert werden. Andere Fabriken wollen Mikroorganismenwachstum in der Extraktionsanlage möglichst vollkommen unterbinden, um Zuckerverluste zu minimieren. Auch hier bedeutet eine Steigerung der Effizienz einen verringerten Wirkstoffeinsatz und damit einen Kostenvorteil.

Die folgenden Beispiele berücksichtigen unterschiedliche Konstellationen in Zuckerfabriken:

### Beispiel 1

Eine 40 %ige Lösung von Kaliumhydroxid (30 kg) wird einer gerührten Lösung von Betafraktion (200 kg, 55 % β-Säuren enthaltend) sowie Wasser (900 l) bei 70°C zugegeben bis sich ein pH-Wert von 10,5 einstellt. Nach einer Rührdauer von zwei Stunden läßt man die Öl- sowie wäßrigen Schichten auftrennen. Die wäßrige Schicht wird abgezogen und auf 5°C abgekühlt. Ausfällungen werden entfernt, um eine wäßrige β-Säurelösung (1.000 l) zu erhalten, welche in einer Zuckerfabrik in einem Extraktionsturm und einer Verarbeitungskapazität von 10.000 t Rüben/Tag verwendet wird. Die bestehende Formalindosieranlage wird anstelle von Formalin mit Weichwasser betrieben und die alkalische Lösung wird mittels Dosierpumpe in die Saugleitung der laufenden Formalinpumpe dosiert. Zum Freispülen der Leitung wird 1 min lang mit Wasser nachgespült. Man dosiert an drei Stellen des Extraktionstroms sechs mal täglich 17 l Lösung, das entspricht in Summe 31 g/t Rüben. Durch diese Dosierung wird der Milchsäuregehalt des Rohsaftes auf einen die Abpreßbarkeit der Schnitzel nicht beeinträchtigenden Wert von 450 mg/kg limitiert.

### Beispiel 2

Es wird eine Lösung nach Beispiel 1 hergestellt, welche analog zu Beispiel 1, jedoch mit zusätzlicher Verwendung von Natronlauge dosiert wird. Während der Dosierung von 14 l alkalischer Lösung/Dosierstelle werden parallel 40 l 5%ige Natronlauge dosiert, so daß die alkalischen Bedingungen im Transportwasserstrom und beim Eintritt in den Saftstrom verstärkt werden. Durch die verstärkten alkalischen Bedingungen wird bereits bei 25 g/t Rüben die gewünschte Wirkung erzielt.

### Beispiel 3

Es wird eine Lösung nach Beispiel 1 hergestellt und in einer Zuckerfabrik mit DDS-Extraktionsanlage und einer Verarbeitungskapazität von 10.000 t Rüben/Tag zur Bekämpfung von Mikroorganismentätigkeit angewendet, wobei keine gezielte Fermentation zugelassen werden soll. Die Lösung wird durch manuelles Eingießen in den Preßwasserkreislauf und in die Luken 2 und 3 der Extraktionsanlage dosiert. Auf eine Anwendung zusätzlicher Lauge wird wegen der manuellen Handhabung verzichtet. Es werden 6 mal täglich 11 l an den genannten Stellen eingebracht, das entspricht insgesamt 20 g/t Rüben. Wenn ein erstes Wiederaufkommen von Mikroorganismen an Nitrit- oder Milchsäurebestimmungen erkennbar ist, wird einmalig bereits zu einem früheren Zeitpunkt dosiert.

### Beispiel 4

In einer Zuckerfabrik mit einer Verarbeitungskapazität von 10.000 t Rüben/Tag sind Einrichtungen zum Aufschmelzen von Baseextrakt und ein auf 70° C temperierbares Gefäß vorhanden. Die Milchsäurebildung soll gemäß Beispiel 1 limitiert werden, wobei Einzelstöße an verschiedenen Stellen der Extraktionsanlage mindestens 30 min zeitversetzt gegeben werden. Eine halbe Stunde vor einem Stoßdosierungszeitpunkt werden 20 l Warmwasser von 70° C, 6 l 10%ige Natronlauge und 3,5 l Baseextrakt vermischt und bis zum Stoßdosierungszeitpunkt gerührt. Anschließend wird die Lösung dosiert und der Behälter wird somit für die Vorbereitung der nächsten Charge frei.

## Patentansprüche

1. Verfahren zur Kontrolle des Gehalts an Mikroorganismen in einem zuckerhaltigen, wässrigen Prozeßmedium von Extraktionsanlagen der Zuckerindustrie unter Einsatz von Hopfensäure als Wirksubstanz,
**dadurch gekennzeichnet, daß**
Hopfensäure in wäßrigem alkalischen Medium in Lösung gebracht dem Prozeßmedium zugegeben wird, wobei der pH-Wert der zugegebenen Lösung höher ist als der pH-Wert des Prozeßmediums, die Hopfensäure im Prozeßmedium von der dissoziierten Form in die undissoziierte Form übergeht.

2. Verfahren nach einem der vorhergehenden Ansprüche,
**dadurch gekennzeichnet, daß**
die Zugabe der Lösung zum Prozeßmedium diskontinuierlich erfolgt.

3. Verfahren nach Anspruch 1 oder 2,
**dadurch gekennzeichnet, daß**
die Lösung Hopfensäure in einer Konzentration von 2 - 40 %, vorzugsweise 5 - 20 %, besonders vorzugsweise 10 - 15 % aufweist.

4. Verfahren nach einem der vorhergehenden Ansprüche,
**dadurch gekennzeichnet, daß**
die dem Prozeßmedium zugegebene Lösung einen pH-Wert von 7,0 - 13,0, vorzugsweise 7,5 - 12,0, vorzugsweise 9,5 - 11,0 aufweist.

5. Verfahren nach einem der vorhergehenden Ansprüche,
**dadurch gekennzeichnet, daß**
es sich - zumindest vorwiegend - bei Hopfensäure um β-Säure handelt.

6. Verfahren nach einem der Ansprüche 1 - 4,
**dadurch gekennzeichnet, daß**
es sich - zumindest vorwiegend - bei der Hopfensäure um α-Säure und/oder Iso-α-Säure handelt.

7. Verfahren nach einem der Ansprüche 1-6,
**dadurch gekennzeichnet, daß**
es sich bei der Hopfensäure - zumindest vorwiegend - um isomerierte Hopfensäure und/oder um deren Derivate oder jeweils um ein Gemisch daraus handelt.

8. Verfahren nach Anspruch 7,
**dadurch gekennzeichnet, daß**
es sich bei den Derivaten - zumindest vorwiegend - um Tetrahydro-α-Säure (THAA) oder um Hexahydro-β-Säure (HHBA) und bei den isomerierten Hopfensäure-Derivaten um Iso-α-Säure (IAA), Rho-Iso-α-Säure (RIAA), Tetrahydro-iso-α-Säure (THIAA) und/oder Hexahydroxid-Iso-α-Säure oder jeweils um ein Gemisch daraus handelt

9. Verfahren nach einem der vorhergehenden Ansprüche,
**dadurch gekennzeichnet, daß**
als alkalisches Medium ein Alkalihydroxid, insbesondere Kaliumhydroxid oder Natriumhydroxid oder ein Gemisch davon, vorgesehen ist.

10. Verfahren nach Anspruch 9,
**dadurch gekennzeichnet, daß**
die Konzentration des alkalischen Mediums 0,1-5%, vorzugsweise 1 - 5 %, vorzugsweise 2 - 4 % Alkalihydroxid beträgt.

11. Verfahren nach Anspruch 1,
**dadurch gekennzeichnet, daß**
neben der Zugabe der Lösung zusätzlich Alkalilauge dem.Prozeßmedium zugeführt wird.

12. Verfahren nach einem der vorhergehenden Ansprüche,
**dadurch gekennzeichnet, daß**
die Hopfensäure in dem alkalischen Medium als Salz gelöst ist.

13. Verfahren nach einem der vorhergehenden Ansprüche,
**dadurch gekennzeichnet, daß**
die Lösung manuell dem Prozeßmedium zugegeben wird.

14. Verfahren nach einem der vorhergehenden Ansprüche 1 - 12,
**dadurch gekennzeichnet, daß**
die Lösung über bereits vorhandene Dosiersysteme dem Prozeßmedium zugegeben wird.

15. Verwendung von Hopfensäure zur Kontrolle des Gehalts an Mikroorganismen in einem zuckerhaltigen, wässrigen Prozeßmedium von Extraktionsanlagen der Zuckerindustrie,
**dadurch gekennzeichnet, daß**
Hopfensäure in einem alkalischen Medium in Lösung gebracht dem Prozeßmedium zugegeben wird, wobei der pH-Wert der Lösung höher ist als der pH-Wert des Prozeßmediums und die Hopfensäure im Prozeßmedium von der dissoziierten Form in die undissoziierte Form übergeht nach einem der Verfahrensansprüche 1 - 14.

## Claims

1. Method for controlling the content of micro-organisms in a sugar-containing aqueous process medium from extraction plants of the sugar industry, using hop acid as the active substance, **characterised in that** hop acid brought into solution in aqueous alkaline medium is added to the process medium, the pH value of the added solution being higher than the pH value of the process medium, and the hop acid in the process medium passing from the dissociated form into the undissociated form.

2. Method according to the preceding claim, **characterised in that** the addition of the solution to the process medium is effected discontinuously.

3. Method according to claim 1 or 2, **characterised in that** the solution has hop acid in a concentration of from 2 to 40%, preferably from 5 to 20%, especially preferably from 10 to 15%.

4. Method according to any one of the preceding claims, **characterised in that** the solution added to the process medium has a pH value of from 7.0 to 13.0, preferably from 7.5 to 12.0, preferably from 9.5 to 11.0.

5. Method according to any one of the preceding claims, **characterised in that** hop acid is, at least predominantly, β-acid.

6. Method according to any one of claims 1 to 4, **characterised in that** the hop acid is, at least predominantly, α-acid and/or iso-α-acid.

7. Method according to any one of claims 1 to 6, **characterised in that** the hop acid is, at least predominantly, isomerised hop acid and/or the derivatives thereof or, in each case, a mixture thereof.

8. Method according to claim 7, **characterised in that**, at least predominantly, the derivatives are tetrahydro-α-acid (THAA) or hexahydro-β-acid (HHBA) and the isomerised hop acid derivatives are iso-α-acid (IAA), rho-iso-α-acid (RIAA), tetrahydro-iso-α-acid (THIAA) and/or hexahydroxide-iso-α-acid or, in each case, a mixture thereof.

9. Method according to any one of the preceding claims, **characterised in that** an alkali hydroxide, especially potassium hydroxide or sodium hydroxide, or a mixture thereof, is provided as the alkaline medium.

10. Method according to claim 9, **characterised in that** the concentration of the alkaline medium is from 0.1 to 5%, preferably from 1 to 5%, preferably from 2 to 4% of alkali hydroxide.

11. Method according to claim 1, **characterised in that**, apart from the addition of the solution, alkaline lye is additionally supplied to the process medium.

12. Method according to any one of the preceding claims, **characterised in that** the hop acid is dissolved in the alkaline medium in the form of a salt.

13. Method according to any one of the preceding claims, **characterised in that** the solution is added manually to the process medium.

14. Method according to any one of the preceding claims 1 to 12, **characterised in that** the solution is added to the process medium by means of metering systems that are already present.

15. Use of hop acid for controlling the content of micro-organisms in a sugar-containing aqueous process medium from extraction plants of the sugar industry, **characterised in that** hop acid brought into solution in an alkaline medium is added to the process medium, the pH value of the solution being higher than the pH value of the process medium and the hop acid in the process medium passing from the dissociated form into the undissociated form according to any one of the method claims 1 to 14.

## Revendications

1. Procédé de contrôle de la teneur en microorganismes dans un milieu de processus aqueux, contenant du sucre, d'installations d'extraction de l'industrie sucrière en utilisant de l'acide de houblon en tant que substance active,
**caractérisé en ce que**
de l'acide de houblon mis en solution dans un milieu alcalin aqueux est ajouté au milieu de processus, la valeur de pH de la solution ajoutée étant supérieure à la valeur de pH du milieu de processus, l'acide de houblon passant dans le milieu de processus de la forme dissociée à la forme non dissociée.

2. Procédé selon l'une des revendications précédentes,
**caractérisé en ce que**
l'ajout de la solution au milieu de processus est effectué de façon discontinue.

3. Procédé selon la revendication 1 ou 2,
**caractérisé en ce que**
la solution comprend de l'acide de houblon selon une concentration comprise entre 2 et 40 %, de préférence entre 5 et 20 %, de façon particulièrement préférée entre 10 et 15%.

4. Procédé selon l'une des revendications précédentes,
**caractérisé en ce que**
la solution ajoutée au milieu de processus présente une valeur de pH comprise entre 7,0 et 13,0, de préférence entre 7,5 et 12,0, de façon plus préférentielle entre 9,5 et 11,0.

5. Procédé selon l'une des revendications précédentes,
**caractérisé en ce que**,
pour ce qui est de l'acide de houblon, il s'agit - au moins majoritairement - d'acide bêta.

6. Procédé selon l'une des revendications 1 à 4,
**caractérisé en ce que**,
pour ce qui est de l'acide de houblon, il s'agit - au moins majoritairement - d'acide alpha et/ou d'acide iso-alpha.

7. Procédé selon l'une des revendications 1 à 6,
**caractérisé en ce que**,
pour ce qui est de l'acide de houblon, il s'agit - au moins majoritairement - d'acide de houblon isomérisé et/ou de ses dérivés, ou respectivement d'un mélange de ceux-ci.

8. Procédé selon la revendication 7,
**caractérisé en ce que**,
pour ce qui est des dérivés, il s'agit - au moins majoritairement - de tétrahydro-α-acide (THAA) ou d'hexahydro-β-acide (HHBA) et, pour ce qui est des dérivés d'acide de houblon isomérisé, d'iso-α-acide (IAA), de rho-iso-α-acides (RIAA), de tétrahydro-iso-α-acide (THIAA) et/ou d'hexahydroxyde-iso-α-acide, ou respectivement d'un mélange de ceux-ci.

9. Procédé selon l'une des revendications précédentes,
**caractérisé en ce que**
l'on envisage en tant que milieu alcalin un hydroxyde alcalin, en particulier l'hydroxyde de potassium ou l'hydroxyde de sodium, ou un mélange de ceux-ci.

10. Procédé selon la revendication 9,
**caractérisé en ce que**
la concentration du milieu alcalin est comprise entre 0,1 et 5 %, de préférence entre 1 et 5 %, de préférence encore entre 2 et 4 % d'hydroxyde alcalin.

11. Procédé selon la revendication 1,
**caractérisé en ce que**,
outre l'ajout de la solution, on amène en plus dans le milieu de processus une lessive alcaline.

12. Procédé selon l'une des revendications précédentes,
**caractérisé en ce que**
l'acide de houblon est dissous dans le milieu alcalin en tant que sel.

13. Procédé selon l'une des revendications précédentes,
**caractérisé en ce que**
la solution est ajoutée manuellement au milieu de processus.

14. Procédé selon l'une des revendications 1 à 12 précédentes,
**caractérisé en ce que**
la solution est ajoutée au milieu de processus par des systèmes de dosage déjà existants.

15. Utilisation d'acide de houblon pour contrôler la teneur en microorganismes dans un milieu de processus aqueux, contenant du sucre, d'installations d'extraction de l'industrie sucrière,
**caractérisé en ce que**
de l'acide de houblon mis en solution dans un milieu alcalin est ajouté au milieu de processus, la valeur de pH de la solution étant supérieure à la valeur de pH du milieu de processus, et l'acide de houblon passant dans le milieu de processus de la forme dissociée à la forme non dissociée, selon une des revendications 1 à 14.
